# EUROPEAN PATENT APPLICATION

(11) **EP 1 895 439 A1**
(43) Date of publication of application: **05.03.2008**
(21) Application number: 06018246.6
(22) Date of filing: 31.08.2006
(51) Int. Cl.: G06F 21/00

(54) **Method and system for controlling use of digital data objects and for exchanging of digital data objects and associated rights object between an application and a server**

(71) Applicant: NTT DoCoMo Inc., Chiyoda-ku Tokyo 100-6150 (JP)
(72) Inventor: Schaefer, Christian, 85764 Oberschleißheim (DE)
(74) Representative: Stöckeler, Ferdinand

(57) **Abstract**

A reference monitor is described which enforces usage control on a data object based on an associated rights object and manages an exchange of the data object and the associated rights object between an application and a usage control server. The reference monitor includes a policy enforcement point, a policy decision point, a data object retriever/receiver and a rights object storage The policy enforcement point has an interface for communicating with the application The policy decision point decides on a data object request received from the application via the policy enforcement point. The data object retriever/receiver exchanges the data object with the usage control server and the policy enforcement point. The rights object storage receives and stores the rights object associated with the data object from the usage control server.

## Description

The present invention relates to enforcement of usage control and the data exchange between a user and a provider, and more specifically to the field of security policy enforcement like usage control, as it is for example required for mobile applications and services. More specially, the present invention concerns a reference monitor and a method for managing an exchange of a data object and an associated rights object between an application and a usage control server.

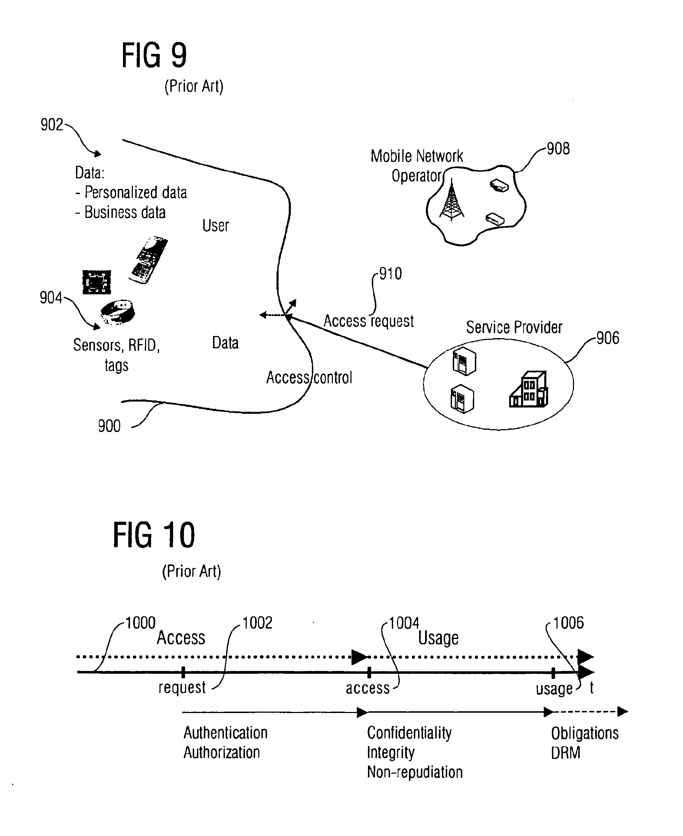

The access control concerns the problem of granting access to data on the basis of information available at the very moment of deciding whether or not to release the data. Fig. 9 illustrates a scenario where access control is carried out. Fig. 9 shows a user domain 900 including a personalized data and business data 902 and communication devices 904, for example a mobile phone, sensors, RFID (RFID = Radio Frequency Identification) transmitters, etc. Further, a service provider 906 and a mobile network operator 908 are shown. The service provider 906 attempts to access the user data 902 and issues an access request 910 as is indicated by the arrow pointing from the service provider 906 to the user domain 900. At this point access control is usually carried out or executed by a system, e.g. the operating system of a user device, according to predefined rules from the user 900 to either allow or deny the access request from the service provider 906. The respective conditions for allowing/denying access include, for instance, the requester's membership in a certain role or certain clearance attributes. The role of the service provider 906 and the mobile network operator 908 are interchangeable in Fig. 9.

The usage control and the access control are for example described in M. Hilty, D. Basin and A. Pretschner, "On Obligations", ESORICS 2005, LNCS 2679, pp. 98-117, 2005, where the authors describe that access control is concerned with granting access to sensitive data based on conditions that relate to the past or present, so-called provisions. Expressing requirements from the domain of data protection necessitates extending this notion with conditions that relate to the future. Obligations, in this sense are concerned with commitments of the involved parties. At the moment of granting access, adherence to these commitments cannot be guaranteed. An example is the requirement "do not redistribute data" where the actions of the involved parties may not even be observable. The authors provide a formal framework that allows to precisely specify the data protection policies. A syntactic classification of formulas gives rise to natural and intuitive formal definitions of provisions and obligations. Based on this classification, the authors present different mechanisms for checking adherence to agreed upon commitments.

A further publication concerning the usage control is by J. Park, R. Sandhu, "Towards Usage Control Models: Beyond Traditional Access Control", SACMAT 2002, Monterey, USA, June 2002, where the authors develop the concept of usage control (UCON). The authors show that usage control encompasses the traditional concepts of access control, trust management and digital rights management and goes beyond them in its definition and scope. While usage control concepts have been mentioned off and on in the security literature for some time, there has been no systematic treatment so far. By unifying these three concepts UCON offers a promising approach for the next generation of access control. Traditional access control has focused on a closed system where all users are known and primarily utilizes the server side reference monitor within a system. Trust management has been introduced to cover authorization for strangers in an open environment such as the Internet. Digital rights management has dealt with client side control of information usage. The UCON model also includes a component description and a short description about reverse UCON which means that, for example, logging data are part of UCON.

Each of these concepts is motivated by its own target problems. Innovations in information technology and business modules are creating new security and privacy issues, which require elements of all three concepts. To deal with these aspects in a systematic unified manner the authors propose a new UCON model. UCON enables finer-grained control over usage of digital objects than that of traditional access control policies and models. For example, print once as opposed to unlimited prints. Unlike traditional access control or trust management, it covers both an environment having a central control authority and an environment where no central control authority is available. UCON also deals with privacy issues in both commercial and non-commercial environments. The authors first discuss access control, trust management, and digital rights management and describe general concepts of UCON and the information security discipline. Then they define components of the UCON models and discuss how authorizations and access controls can be applied under a UCON model. Next they demonstrate some applications of the UCON model and develop further details. They use several examples during these discussions to show the relevance and validity of their approach.

Obligations refer to conditions that are imposed on an accessed object to be fulfilled in the future. Work on obligations was conducted, for example, in the publications described above, where the authors differentiate between observable obligations and non-observable obligations. An obligation will be observable if it is possible to observe whether the policy was enforced, for example, that some information was not published within two days. The authors show how it is possible for some non-observable obligations to be transformed into observable obligations.

Usage control generalizes the notion of a requester of certain data having a requester's membership in a certain role or certain clearance attribute, to what must, or must not happen with the data in the future. Fig. 10 illustrates the close relationship between access control and usage control as usage control is concerned with the usage of data after the access. In this vein usage control is concerned with requirements, named obligations in Fig. 10, such as "this data must be deleted within 30 days" or "this information must not be published within the next two days". Fig. 10 shows a time axis 1000 indicating that at first there is a request 1002 for data and the data may be accessed 1004 so that the data can be used 1006. To access the data after the request, the user needs to authenticate and authorize himself. The access is then granted assuming a certain confidentiality, integrity, and non-repudiation. Some obligations or conditions apply after the access and have to be enforced at a time t and/or afterwards, e.g. restricting usage to a time frame. In general, requirements of this kind cannot always be enforced or their fulfillment cannot always be observed due to the fact that control over the data is lost, once the data has been copied.

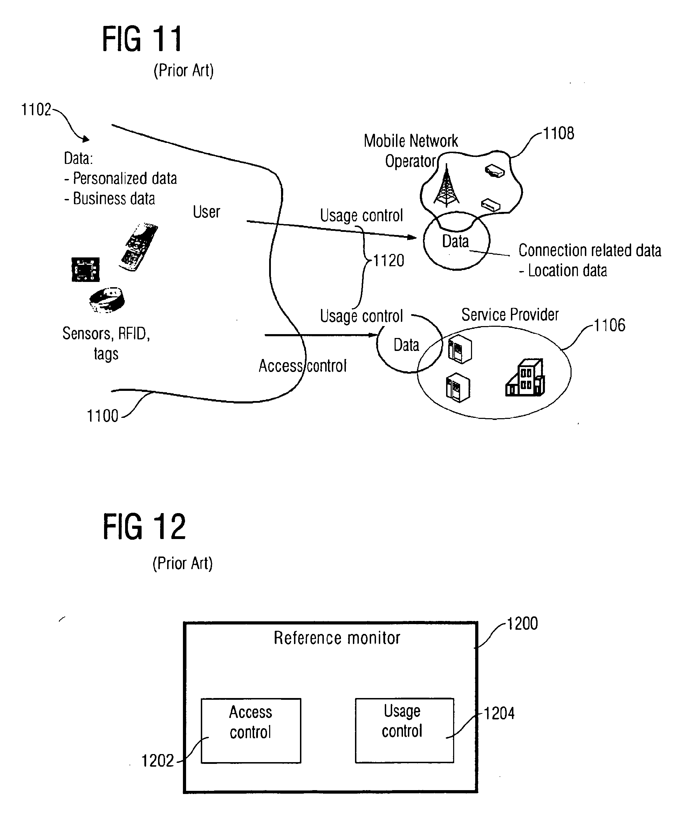

Another exemplified scenario is illustrated in Fig. 11.
Fig. 11 shows again a user domain 1100, a service provider 1106 and a mobile network operator 1108. Once the user 1100 allowed the mobile network operator 1108 or the service provider 1106 to access the user data 1102, the usage control 1120 is desired by the user 1100. When the user 1100 provided data to the service provider 1106 or to the mobile network operator 1108, the user is no longer in the position to control what is done with his data. In Fig. 11 the user 1100 assumes the role or part of a data provider, i.e. providing data to the service provider 1106, which is now the data consumer working with this data. Both roles/parts are not bound to a specific entity and an entity can change roles or have both roles at the same time depending on the scenario.

With an ever-increasing amount of, for example, personal data being stored and processed on computers, the specification, negotiation and enforcement of usage control requirements become a serious challenge and it is an important research topic to know the extent to which usage control can be enforced. To enforce usage control requirements some enforcement mechanisms in an infrastructure need to be present.

The protocol architectures on the data consumer side using e.g. a reference monitor traditionally lack the support of full usage control requirements. For example, it is not possible to bind certain access right to a user and a device at the same time.

More and more context-aware services, like for example location based services will be offered in the future. Some context-aware services in particularly services like location based services raise privacy concerns and questions, for example, what happens to the user's location data after it has been used by a service provider. Prior art concepts do not fully support such scenarios. Further examples for such scenarios are
- the notification of an access to an owner,
- the restriction of a further distribution,
- the limitation of the retention time,
- the mandatory use of a protection mechanisms, and
- the duty of keeping the data up-to-date.

The latter usage control examples are not restricted to context-aware services as they apply to all scenarios where a control over data is desired after this data has been accessed. For example the "limitation of retention time" is one example which is not supported by current digital rights management technologies or reference monitors.

Basic work in the field of trusted platforms has e.g. been done by the trusted computing group, HTTP://www.trustedcomputinggroup.org, March 2006 and such platforms are known to people skilled in the art.

The term reference monitor was first introduced in J. Anderson, "Computer Security Technology Planning Study, Volume II", October 1972, for access control. The document describes that a reference monitor is used to validate all references, for example, programs, data, peripherals, etc., of an executing program against those authorized for the subject, for example, users. In addition to the authorization function the monitor also assures that the reference is the right kind, for example, read or write. This notion of reference monitor was extended in the publication described above. The reference monitor can monitor and prohibit actions and additionally, it can also enforce actions specified in a security policy and trigger corrective actions such as the application of penalties.

Fig. 12 shows a prior art reference monitor 1200 providing access control 1202 and usage control 1204. As mentioned above, DRM is part of the usage control as DRM techniques can be used on the data consumer side to enforce usage control policies. Privacy management is another part of the usage control.

The general idea of using DRM technology for privacy management is presented in L. Korba and S. Kenny, "Towards Meeting the Privacy Challenge: Adapting DRM", ACM Workshop on Digital Rights Management, Washington DC, USA, November 2002, where the authors describe how a DRM systems needs to be adapted to support privacy management. In M. Casassa Mont, R. Thyne, K. Chan, P. Bramhall, "Extending HP Identity Management Solutions to Enforce Privacy Policies and Obligations for Regulatory Compliance by Enterprises", Technical Report, HPL-2005-110, June 2005, this idea is utilized and an extension of HP (HP = Hewlett Packard) Identity Management software is described, which provides data provider enforcement of privacy obligations using HP products. But this work is missing the enforcement of the privacy policy on the client after the data has been accessed on the server and transferred to the client.

Another implementation can be found in A. Hohl and A. Zugenmaier, "Safeguarding Personal Data Using Trusted Computing in Pervasive Computing", Series: The International Series in Engineering and Computer Science, Vol. 780, pp 147-155, P. Robinson, H. Vogt, W. Wagealla(Eds.), 2005, where also trusted platform modules specified by the trusted computing group are utilized. This work extends the prior work only with respect to guaranteeing the integrity of the platform, where the policies are enforced. The just mentioned article deals with privacy management, however, the concepts discussed do not support full enforcement mechanisms for the usage control.

The Open Mobile Alliance (OMA) specifies a DRM system specifically targeting mobile phones. The specification OMA, "DRM Architecture", Candidate Version 2.0, September 8, 2005 separates the data object from its obligations so that there is a data object and a rights object enabling a free distribution of the data object, i.e. the content. Thus a user can copy the data object to other devices but needs a new rights object to use it. Furthermore, push and pull models are defined for the distribution of content of data objects, and it is described how streaming of DRM content can be done.

In contrast to other approaches the project DReaM, Open Media Commons, http://www.openmediacommons.org, June 2006, which was initiated by Sun, is specifying a framework for DRM systems which leverages identity & role based licensing systems. The project claims that it is possible to plug into the framework many content protection systems. The main goals of the project are to separate the content protection mechanisms from the back office services like licensing and provide the latter one. The second goal is to provide content protection functions based on open, royalty free technology for Conditional Access Systems (CAS), where consumption of the content is immediate, and DRM.

A further discussion of the above described prior art approaches can be found in the following publications:
- R. Agrawal, J. Kiernan, R. Srikant and Y. Xu, "Hippocratic Databases", 28th VLDB Conference, Hong Kong, China, 2002,
- J. Anderson, "Computer Security Technology Planning Study, Volume II", October 1972,
- H. Aono, R. Hoshino and S. Hongo, "Tamper-Resistant Charging Technology for a Seamless Environment", NTT DoCoMo Technical Journal Vol. 6 No. 2, pp. 31-37, September 2004,
- M. Casassa Mont, R. Thyne, K. Chan, P. Bramhall, "Extending HP Identity Management Solutions to Enforce Privacy Policies and Obligations for Regulatory Compliance by Enterprises", Technical Report, HPL-2005-110, June 2005,
- M. Hilty, D. Basin and A. Pretschner, "On Obligations", ESORICS 2005, LNCS 2679, pp. 98-117, 2005,
- Hohl and A. Zugenmaier, "Safeguarding Personal Data Using Trusted Computing in Pervasive Computing", Series: The International Series in Engineering and Computer Science, Vol. 780, pp 147-155, P. Robinson, H. Vogt, W. Wagealla(Eds.), 2005,
- G. Karjoth, M. Schunter and M. Waidner, "Platform for Enterprise Privacy Practices: Privacy-enabled Management of Customer Data", 2nd Workshop on Privacy Enhancing Technologies, San Francisco, USA, April 2002,
- L. Korba and S. Kenny, "Towards Meeting the Privacy Challenge: Adapting DRM", ACM Workshop on Digital Rights Management, Washington DC, USA, November 2002,
- NTT DoCoMo, IBM, Intel Cooperation, "Trusted Mobile Platform - Hardware Architecture Description", Trusted Mobile Platform, Rev. 1, October 2004,
- OMA, "DRM Architecture", Candidate Version 2.0, 8 September 2005,
- Open Media Commons, http://www.openmediacommons.org/, June 2006,
- J. Park, R. Sandhu, "Towards Usage Control Models: Beyond Traditional Access Control", SACMAT 2002, Monterey, USA, June 2002,
- Pretschner, M. Hilty, D. Basin: Usage Control; To appear in Communications of the ACM (CACM), 2006,
- http://www.trustedcomputinggroup.org, Trusted Computing Group, March 2006.

Starting from the above discussed prior art, it is the object of the present invention to provide a new concept for a reference monitor that allows the enforcement of usage control requirements, the flexible right and content binding, and the support of global states in conjunction with a usage control server.

This object is achieved by a reference monitor according to claim 1, and by a method according to claim 13.

The present invention further provides a computer program having program code for executing the inventive method, when the program code runs on a computer.

The present invention provides a reference monitor for enforcing usage control on a data object based on an associated rights object and for managing an exchange of the data object and the associated rights object between an application and a usage control server, the rights object defining a user and/or device based binding between the rights object and the data object, the reference monitor comprising
a policy enforcement point having an interface for communicating with the application;
a policy decision point coupled to the policy enforcement point and configured to decide on a data object request received from the application via the policy enforcement point;
a data object retriever/receiver coupled to the policy decision point, to the policy enforcement point and to the usage control server, the data object retriever/receiver being configured to receive an instruction from the policy decision point and to exchange the data object with the usage control server and the policy enforcement point on the basis of the instruction from the policy decision point; and
a rights object storage coupled to the policy decision point and the usage control server, the rights object storage being configured to receive and store the rights object associated with the data object from the usage control server on the basis of an instruction from the policy decision point.

The present invention provides a method for enforcing usage control on a data object based on an associated rights object and for managing an exchange of the data object and the associated rights object between an application and a usage control server, the rights object defining a user and/or device based binding between the rights object and the data object, the method comprising:
communicating with the application through a policy enforcement point;
deciding on a data object request received from the application via the policy enforcement point by a policy decision point;
receiving an instruction from the policy decision point at a data object retriever/receiver;
exchanging the data object with the usage control server and the policy enforcement point on the basis of the instruction from the policy decision point through the data object retriever/receiver;
receiving the rights object associated with the data object from the usage control server on the basis of an instruction from the policy decision point through a rights object storage; and
storing the received rights object associated with the data object in the rights object storage.

In accordance with the present invention a generic architecture of a reference monitor is taught which provides for an efficient usage and access control, for a flexible binding of rights objects and data objects, and for the management of a global context. The reference monitor can be implemented on any client as the architecture is generic and no special software requirements are specified. Furthermore, the reference monitor can communicate with a usage control server as the usage control server can provide, for example, content data, but the reference monitor does not need to have a permanent connection to the server. The reference monitor applies the usage control policies to all data leaving the application and, thus, enforces the usage control policies. The architecture, with the reference monitor being in between the application and the usage control server, allows enforcing usage control requirements. The architecture is generic so that several scenarios can be supported where usage control is needed, for example, not only in the field of handling music or media files, but also in the field of managing important business documents.

The reference monitor is based on the work done in the field of DRM technologies utilizing these techniques as a basic building block. As DRM technologies are not intended to support all usage control requirements, for example, deletion of data after expiry of a validity period, the present invention extends these techniques. The separation of data and rights object is also extended. Additional features like the support of usage control requirements in the rights object definition are included.

Embodiments of the present invention provide the advantage that identity based or device based binding of content is supported, i.e. there is no restriction to a single scenario. Furthermore, embodiments of the present invention enable enforcing usage control policies like "deletion after x days". Moreover, global states are supported in conjunction with a usage control server, for example, a song or a media file is allowed to be played 10 times independent of the device.

Embodiments of the present invention therefore provide a flexible binding, meaning that user identity based rights as well as device based rights as well as combinations of these are supported. Furthermore, these rights are flexible in the way that, for example, deletion of data after a certain time period can be granted within the rights object and will be carried out by the reference monitor.

In the following, preferred embodiments of the present invention will be described with reference to the accompanying drawings, in which
- Fig. 1: shows a block diagram of a first embodiment of the inventive reference monitor;
- Fig. 2: shows a block diagram of a second embodiment of the inventive reference monitor;
- Fig. 3: shows a message sequence chart of an exemplified initialization procedure;
- Fig. 4: shows a message sequence chart of an exemplified regular update procedure;
- Fig. 5: shows a message sequence chart of an exemplified protection mechanism;
- Fig. 6: shows a message sequence chart of an exemplified retention time procedure;
- Fig. 7: shows a message sequence chart of an exemplified notification of access procedure;
- Fig. 8: shows a message sequence chart of an exemplified restriction of distribution procedure;
- Fig. 9: illustrates a prior art access request procedure;
- Fig. 10: illustrates a prior art usage control definition;
- Fig. 11: illustrates the lack of controllability in prior art approaches art of usage control enforcement; and
- Fig. 12: illustrates a prior art reference monitor.

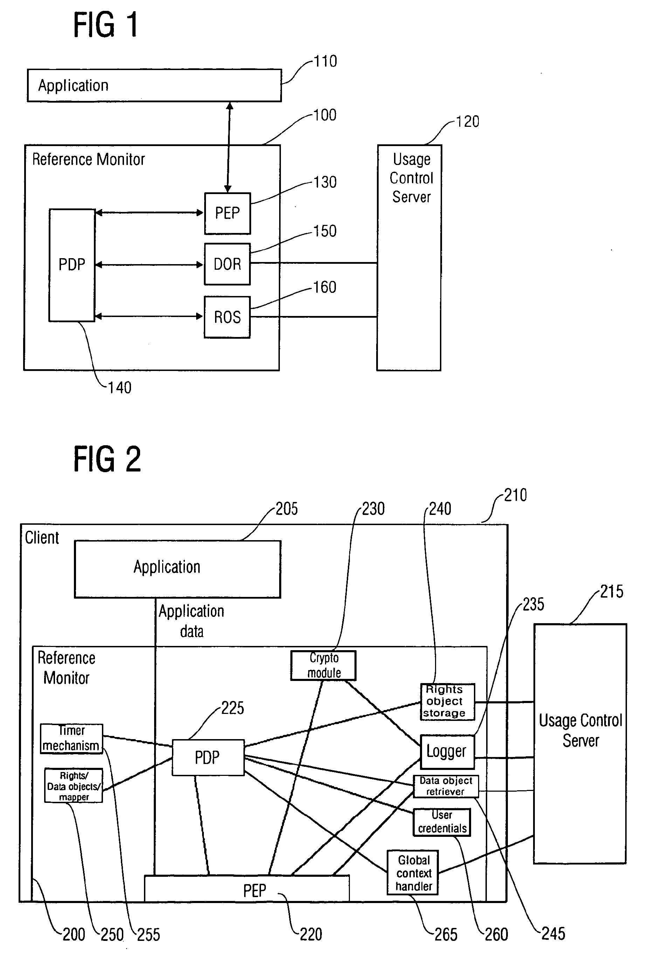

A first embodiment of a reference monitor 100 is now described with regard to Fig. 1. Fig. 1 the reference monitor 100 which is coupled to an application 110 as well as to a usage control server 120. The reference monitor 100 is the interface for the application 110 to any exchange of data with the usage control server 120 and the rest of the system on the client. In accordance with one preferred embodiment, the reference monitor 100 is the only interface for exchange of data between the application and the shown usage control server 120. The reference monitor 100 manages the exchange of a data object between the usage control server 120 and the application 110 and stores an associated rights object. The rights object comprises the rights associated with the data object, which could refer to a user based or a device based or both based binding between the rights and the content of the data object. The reference monitor 100 comprises a policy enforcement point 130 (PEP), a policy decision point 140 (PDP), a data object retriever or receiver (DOR) 150, and a rights object storage (ROS) 160.

The policy enforcement point 130 serves as the reference monitor's interface to the application 110. All communication between the reference monitor 100 and the application 110 is carried out utilizing the policy enforcement point 130. In accordance with a preferred embodiment, all the communication from the application 110 passes the policy enforcement point 130. For example, to request a certain data object from the usage control server 120 or any other data storage, e.g. a local storage device, the application 110 communicates a data object request to the policy enforcement point 130 of the reference monitor 100. The policy enforcement point 130 forwards the application's data request to the policy decision point 140. The policy decision point 140 is coupled to the policy enforcement point 130 and decides on the application's data object request.

The data object retriever 150 then gets instructed by the policy decision point 140 to retrieve the data object from the usage control server 120, given that the policy decision point granted (allows) the application's data object request. The data object retriever 150 is the interface of the reference monitor 100 for communicating with the usage control server 120 for retrieving or receiving data objects.

The data object retriever 150 is coupled to the policy decision point 140 and receives the instruction to retrieve the data object from the usage control server 120. The data object retriever 150 is also coupled to the policy enforcement point 130 in order to provide the data object to the policy enforcement point 130. The data object retriever 150 is further coupled to the usage control server 120 for exchanging data objects.

The rights object storage 160 is the interface of the reference monitor 100 to receive and store rights objects associated with the data objects from the usage control server 120. The rights object storage 160 is coupled to the policy decision point 140 in order to receive an instruction to receive or store a rights object from the usage control server 120 and for providing the rights object to the policy decision point 140. The rights object storage 160 is therefore also coupled to the usage control server 120.

A more detailed embodiment of the present invention is shown in Fig. 2. Fig. 2 shows a reference monitor 200 on a client side. In this embodiment it is assumed that the data content, i.e. the data object, is separated from the usage control policy governing this data object, being provided in the associated rights object. Note, that this is the same terminology as it is used within the OMA DRM specification, OMA, "DRM Architecture", Candidate Version 2.0, 8 September 2005. In one embodiment of the present invention the rights object contains amongst others the usage control policy and keys to decrypt the content of the data object, if required. The data object contains amongst others the content, for example, of a document and it may be encrypted. In another embodiment of the present invention a data object may be signed in order to enable an integrity check.

Fig. 2 depicts the generic architecture of the reference monitor 200. The reference monitor 200 and the application 205 are implemented within a client 210. Fig. 2 also shows the usage control server 215, which is coupled to several components of the reference monitor 200, which will be described in further detail below. The components shown in the embodiment depicted in Fig. 2 are functional entities that are needed to enforce usage control requirements. The lines, for example, between the usage control server 215 and the modules in the reference monitor 200 within the client 210 indicate that a communication protocol is necessary, but it does not mean that the client 210 can only communicate with one usage control server 215.

Generally the client 210 may communicate with several usage control servers and a usage control server, for example, the usage control server 215, may communicate with several clients. The relation between components and the usage control server 215 is a logical one as all data leaving the reference monitor 200 is going through the policy enforcement point (PEP) 220. The lines between the modules and the client indicate that the modules are communicating with each other via application programming interfaces (API) calls but there is only one instance of each module in one reference monitor 200.

The architecture shown in Fig. 2 is generic as the reference monitor 200 can be described as a module only that can be embedded, for example, in an application or a framework or an operating system. The usage control server 215 shown in Fig. 2 serves as a data provider, providing data objects and rights objects to the client 210. An example of an architecture of a usage control server 215 can be found in A. Pretschner, M. Hilty, D. Basin: Usage Control; To appear in Communications of the ACM (CACM), 2006. On the client 210 side, i.e. on the data consumer side, all data requests of the application 205 are handled by the reference monitor 200. If, for example, a usage control policy requests that the data needs to be stored encrypted, the encryption and decryption of the data is handled by the reference monitor 200 before it is stored or retrieved.

The policy enforcement point 220 is the module where the usage control policy is enforced. For example, data is decrypted and forwarded to the requesting application 205. All incoming and outgoing application data streams go through the policy enforcement point 220. Several policy enforcement points 220 can exist and they all are connected to the policy decision point 225. In one embodiment of the present invention all policy enforcement points 220 are connected to the same policy decision point 225. In other words the policy decision point 225 can be connected to several policy enforcement points. An example for having more than one policy enforcement point 220 is an application that uses a database to store data and being able to send e-mails. Then, a first policy enforcement point would be utilized at a database engine and a second policy enforcement point would be used for the engine sending e-mails.

The reference monitor 200 displayed in Fig. 2 further comprises a crypto module 230, which is able to use libraries for cryptographic mechanisms outside of the reference monitor. The crypto module 230 is interacting with the policy enforcement point 200 and a logger module 235 where the latter is used to sign the logging data. The crypto module 230 is coupled to the policy enforcement point 220, the policy decision point 225 and the logger module 235, in order to carry out the de-/encryption and for provision and checking of data signatures.

The logger module 235 is coupled to the crypto module 230, the policy enforcement point 220, and the usage control server 215. The logger module 235 is able to transfer its logging data to the usage control server 215 upon request either by the usage control server 215 itself, or by the policy decision point 225, which would be requesting through the policy enforcement point 220. The logger module 235 has a relation with the crypto module 230, which it is using e.g. to sign the logging data. Another relationship exists between the logger module 235 and the policy enforcement point 220, which writes the logging data to the logger module 235.

The policy decision point 225 is the main component as it decides how the data of the application 205 shall be handled on the basis of the usage control policy. For example, if the data needs to be stored encrypted it tells the policy enforcement point 220 to contact the crypto module 230 for encryption and which crypto algorithm to use.

The rights object storage 240 is coupled to the policy decision point 225 and the usage control server 215. The rights object storage 240 contains the usage control policy, which it received by the usage control server 215 and provides it to the policy decision point 225. The rights object storage 240 can be a standard database and can communicate with the usage control server 215 to receive the rights objects. The rights object storage 240 has only relationships with the policy decision point 225 and the usage control server 215.

The data object retriever/receiver 245 is coupled to the usage control server 215, the policy encryption point 220, and the policy decision point 225. The data object retriever/receiver 245 is responsible for getting the data objects from the usage control server 215. It also has a relationship with the policy enforcement point 220 as it forwards to or receives data objects from the policy enforcement point 220 for storage or for forwarding the data object to the application 205. Furthermore, the policy decision point 225 tells the data object receiver/retriever 245 to get data objects from the usage control server 215.

To map the data object to the corresponding rights object, a rights/data object mapper 250 is utilized, which is only coupled to the policy decision point 225 and is only contacted by the policy decision point 225 for the provision of the mapping between the rights object and the data object or vice versa.

The reference monitor 200 further comprises a timer mechanism module 255, which is coupled to the policy decision point 225. The timer mechanism module 255 is used for policies, which request actions after the expiry of a time, for example, the deletion of data after a specified time period, e.g. two weeks. The timer mechanism module 255 gets timer values from the policy decision point 225 and notifies the policy decision point 225 when timer(s) expire.

Furthermore, Fig. 2 shows a user credentials module 260, which is coupled to the policy decision point 225. The user credential module 260 is needed to authenticate and authorize a user for using the data he requested through the application 205. The user credentials module 260 will be used to either authenticate a user via, for example, user name and password, or to provide credentials of a device the reference monitor 200 is running on. The user credentials module 260 allows to bind the rights object to the identity of a user, to a device, or both depending on the usage scenario for the reference monitor 200. Furthermore, the user credential module 260 can use APIs and services outside the reference monitor 200 to get the user or device credentials, which is not shown in Fig. 2. Within the reference monitor 200, the user credential module 260 is connected to the policy decision point 225 only.

Fig. 2 also shows a global context handler 265 within the reference monitor 200, which is coupled to the policy decision point 225 and the usage control server 215. The global context handler 265 will communicate with the usage control server 215 if context information is needed that is not available within the reference monitor 200, i.e. which is not available locally. For example it may be necessary to request from the usage control server 215 as to how often a certain song or media file has been played already or as to how often a document has already been printed, in case the rights object of a song, media files, or document indicates that the song, media file, or document is supposed to be played or printed only a limited number of times (e.g. twelve times) by the user independent from the device used for playing the song, media file or printing the document.

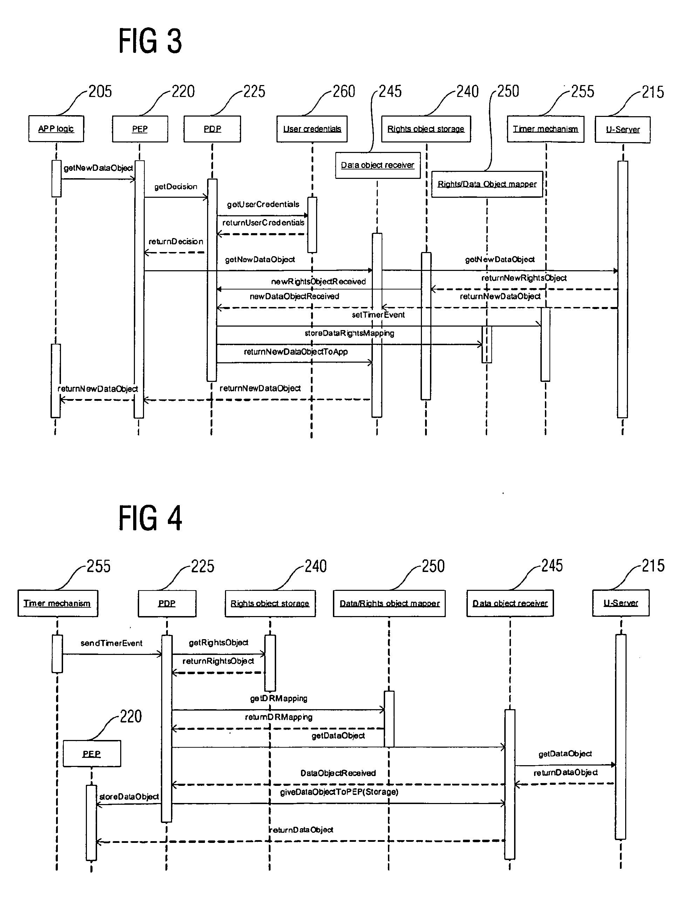

In the following further details of the reference monitor operation will be described on the basis of the message sequence charts shown in Figs. 3 to 8, wherein in Figs. 3 to 8 only those modules of the reference monitor of Fig. 2 involved in the respective procedure are shown and labeled with the same reference signs as in Fig. 2.

Fig. 3 shows an exemplified message sequence chart of an initialization procedure. The message sequence for the initialization of the reference monitor 200 is initiated by the application 205 requests for the first time a data object from the usage control server 215.

In order to get the data object the application transmits a getNewDataObject message to the reference monitor, being more specific to the policy enforcement point 220. Having received the getNewDataObject message the policy enforcement point 220 requests a decision from the policy decision point 225 by transmitting a getDecision message to the policy decision point 225. The policy decision point 225 then requests the current user credentials which are used to authenticate the user at the usage control server 215 transmitting a getUserCredentials message to the user credentials module 260. The user credentials module 260 then returns the user credentials in a returnUserCredentials message. After the policy decision point 225 received the returnUserCredentials message, it returns the decision to the policy enforcement point 220 in a returnDecision message. The policy enforcement point 220 then forwards the request, i.e. the getNewDataObject message to the data object receiver 245. The data object receiver 245 then forwards the getNewDataObject message to the usage control server 215. The usage control server 215 then returns a new rights object to the rights object storage 240 using a returnNewRightsObject message and a new data object to the data object receiver 245 using a returnNewDataObject message.

Via a newRightsObjectReceived message the rights object storage 240 informs the policy decision point 225 that a new rights object was received, and via a newDataObejectReceived message the data object receiver 245 informs the policy decision point 225 that a new data object was received. The policy decision point 225 then instructs the rights/data object mapper 250 by a storeDataRightsMapping message to store the mapping between the data object and the rights object. If a timer is required, for example if the object has a limited retention time, the policy decision point will also transmit a setTimerEvent message to the timer mechanism 255. After that, the policy decision point 225 instructs the data object receiver 245 via a returnNewDataObjectToApp message to return the new data object to the policy enforcement point 220. The instruction from the policy decision point 225 will cause the data object receiver 245 to forward the data object to the policy enforcement point 220, by a returnNewDataObject message. The policy enforcement point 220 forwards the returnNewDataObject message to the application 205, where the user can now work with the requested data.

Fig. 4 shows a message sequence chart for an exemplified regular update procedure. The sequence diagram shown in Fig. 4 shows exemplary which components are involved for a usage control policy where a data object has to be updated on a regular time basis.

After the timer for the data object has expired, a notification is transmitted by the timer mechanism 255 to the policy decision point 225 in a sendTimerEvent message, upon which the policy decision point 225 gets the rights object via a getRightsObject message from the rights object storage 240 to determine which data object has to be updated. The rights object storage 240 returns the rights object to the policy decision point 225 in a returnRightsObject message. The policy decision point 225 then determines the mapping between data and rights object by communicating with the data/rights object mapper 250 by transmitting a getDRMapping message, wherein the data/rights object mapper 250 responds with a returnDRMapping message. After that, the policy decision point 225 tells the data object receiver 245 to get a recent version of the data object by transmitting a getDataObject message. The data object receiver 245 gets a new version of the data object by transmitting a getDataObject message to the usage control server 215, which returns the new data object in a returnDataObject message.

The data object receiver 245 returns a dataObjectReceived message to the policy decision point 225, which then instructs the data object receiver 245 to forward the data object to the policy enforcement point 220 using a give-DataObjectToPEP(storage) message and instructs the policy enforcement point 220 by a storeDataObject message to store the data object once received as appropriate for the application. The data object receiver 245 then forwards the data object to the policy enforcement point 220 in a return-DataObject message. In this example there is no logging on the client needed, as this can be done on the usage control server 215 and thus it can be controlled that this usage control policy was enforced.

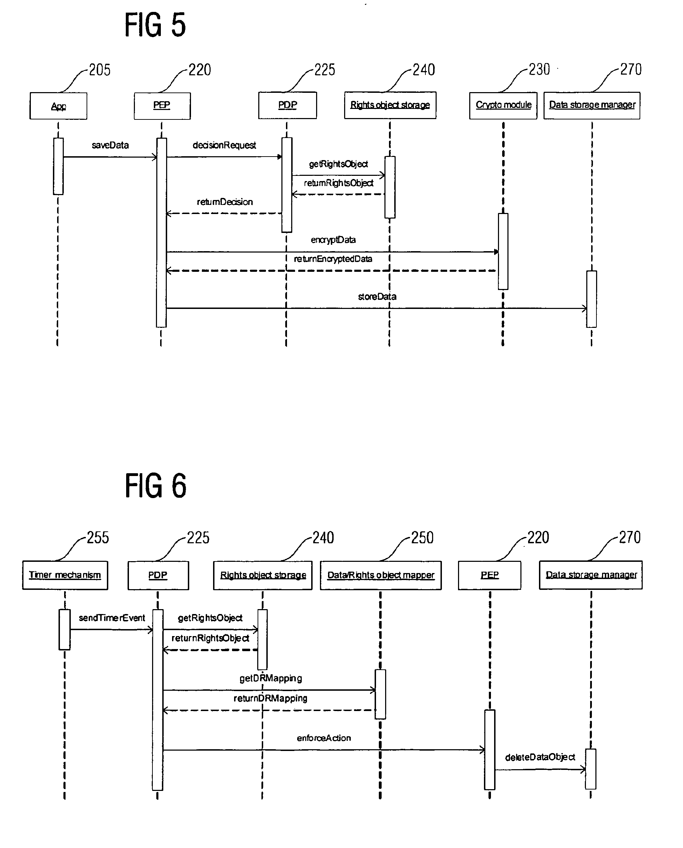

Another sequence diagram is depicted in Fig. 5, illustrating an exemplified protection mechanism. Fig. 5 shows how the usage control requirement "mandatory use of protection mechanism" will be enforced. This requirement means that, for example, all data has to be stored encrypted. In this embodiment, an additional module is provided in the reference monitor 200, namely a data storage manager 270. In another embodiment the data storage manager 270 could be a functional part of an application as an application component. In another embodiment the data storage manager 270 can be part of an operating system. Generally from the perspective of the reference monitor the data storage manager 270 can be an internal or external module.

The application 205 issues a saveData message and the policy enforcement point 220 requests a decision from the policy decision point 225 via a decisionRequest message. The policy decision point 225 transmits a getRightsObject message to the rights object storage 240 and gets the associated rights object via a returnRightsObject message. The policy decision point 225 returns the decision to the policy enforcement point 220 in a returnDecision message. In this example the returnDecision message from the policy decision point 225 indicates that the data has to be stored encrypted.

The policy enforcement point 220 transmits an encryptData message together with the data object and the encryption details, for example the encryption algorithm, keys, etc., to instruct the crypto module 230 to encrypt the data. The crypto module 230 then returns the encrypted data in a returnEncryptedData message. The policy enforcement point 220 then instructs the data storage manager 270 via a storeData message to store the encrypted data object. The data storage manager 270 is an optional module of the reference monitor, e.g. being coupled to a mass storage device and to the policy enforcement point 220.

Fig. 6 shows a message sequence chart of an exemplified retention time procedure, i.e. the sequence diagram of a usage control requirement where some data has to be deleted after a specified time.

After the timer expired, the timer mechanism 205 transmits a sendTimerEvent message to the policy decision point 225, which gets the rights object from the rights object storage 240, using getRightsObject and returnRightsObject messages, similar to what was described above. After the policy decision point 225 received the rights object, it requests the mapping between the rights object and the associated data object from the data/rights object mapper 250, using getDRMapping and returnDRMapping messages as mentioned above. After that, the policy decision point 225 tells the policy enforcement point 220 to delete the data object, by utilizing an enforceAction message, upon which the policy enforcement point 220 issues the corresponding message, here a deleteDataObject message, to the data storage manager 270.

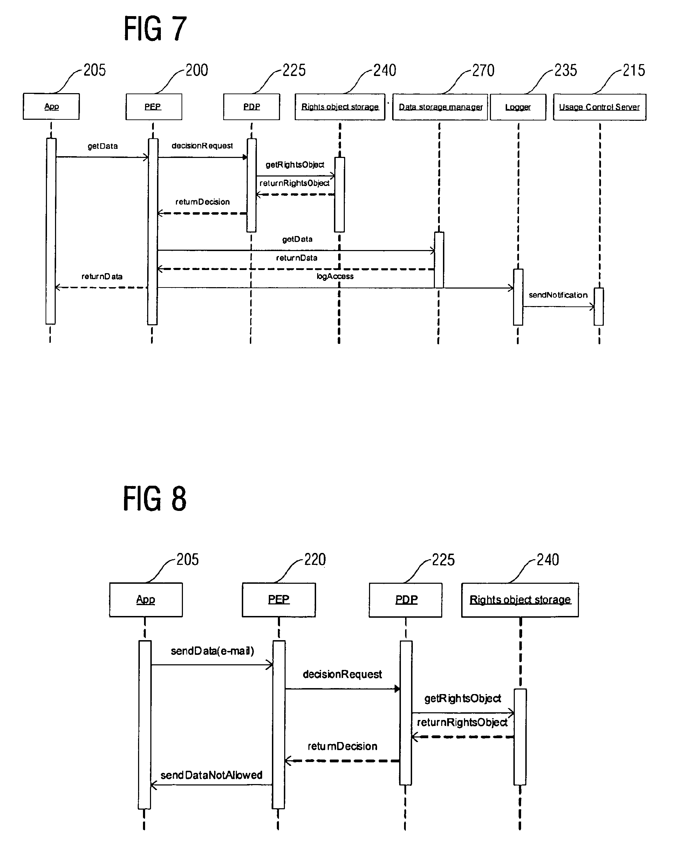

Fig. 7 shows a message sequence chart of an exemplified notification of access procedure, i.e. how the components of the reference monitor act when the owner of some data shall be notified of the access of data according to a usage control policy.

The application 205 requests data from the policy enforcement point 220 by a getData message. The policy enforcement point 220 requests a decision from the policy decision point 225 via a decisionRequest message, similar to what was described above. The policy decision point 225 then gets the associated rights object from the rights object storage 240 using a getRightsObject message and a returnRightsObject message, and returns the decision to the policy enforcement point 220 in a returnDecision message. The policy enforcement point 220 gets the data from the data storage manager 740 by transmitting a getData message. Upon receipt of the getData message the data storage manager 270 returns the data in a returnData message. The policy enforcement point 220 forwards the data to the application 205 in a returnData message and notifies the logger module 235 via a logAccess message that the data was accessed which the logger module 235 forwards to the usage control server 215 VIA a sendNotification message in order to maintain a global context.

Fig. 8 shows a message sequence chart for an exemplified restriction of distribution procedure, exemplifying how distribution of data can be restricted.

The application 205 desires to send a data object via e-mail. Therefore, the application 205 requests the policy enforcement point 220 to send an e-mail in a sendData(e-mail) message. According to what was described above, the policy enforcement point 220 requests a decision from the policy decision point 225 issuing a decisionRequest message, which then gets the associated rights object from the rights object storage 240 using a getRightsObject message and a returnRightsObject message. After the policy decision point 225 has received the associated rights object, it returns a decision to the policy enforcement point 220 in a returnDecision message, which, in turn, returns a send-DataNotAllowed message to the application 205 in the example illustrated in Fig. 8. In the example in Fig. 8, the policy enforcement point 220 refuses the transmission of the data via e-mail as it was decided by the policy decision point 225.

The present invention provides a generic architecture for a reference monitor and there are several options how a concrete implementation may look like. In a centralized solution the reference monitor is delegating all tasks to a server, for example, a company network. In a client based embodiment the reference monitor is completely implemented on a client, i.e. at a data consumer. In other embodiments distributed implementations are conceivable. In a distributed implementation, some parts of the reference monitor are implemented on a client and other parts are implemented somewhere else, for example, on a server of a corporate network. Other options can be conceived when considering where the reference monitor is located in a system. In one embodiment a reference monitor could be included in an application. In another embodiment, the reference monitor could be included in a framework and in yet another embodiment of the present invention, the reference monitor could be included in an operating system. Another option would be to include only the policy enforcement point into an application and other parts of the reference points are independent of the application. Then the reference monitor could be part of a framework in an application, daemon, etc.

The present invention provides the advantage that usage control requirements can be carried out efficiently, global contexts can be handled in a proper way, and flexible binding of rights to users, devices or both is enabled.

Depending on certain implementation requirements of the inventive methods, the inventive methods can be implemented in hardware or in software. The implementation can be performed using a digital storage medium, in particular, a disc, DVD or a CD having electronically readable control signals stored thereon, which cooperate with a programmable computer system such that the inventive methods are performed. Generally, the present invention is, therefore a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. A reference monitor for enforcing usage control on a data object based on an associated rights object and for managing an exchange of the data object and the associated rights object between an application (110; 205) and a usage control server (120; 215), the rights object defining a user and/or device based binding between the rights object and the data object, the reference monitor comprising:
a policy enforcement point (130; 220) having an interface for communicating with the application (110; 205);
a policy decision point (140; 225) coupled to the policy enforcement point (130; 220) and configured to decide on an data object request received from the application (110; 205) via the policy enforcement point (130; 220);
a data object retriever/receiver (150; 245) coupled to the policy decision point (140; 225), to the policy enforcement point (130; 220) and to the usage control server (120; 215), the data object retriever/receiver (150; 245) being configured to receive an instruction from the policy decision point (140; 225) and to exchange the data object with the usage control server (120; 215) and the policy enforcement point (130; 225) on the basis of the instruction from the policy decision point (140; 225); and
a rights object storage (160; 240) coupled to the policy decision point (140; 225) and the usage control server (120; 215), the rights object storage (160; 240) being configured to receive and store the rights object associated with the data object from the usage control server (120; 215) on the basis of an instruction from the policy decision point (140; 225).

2. The reference monitor of claim 1, further comprising a rights/data object mapper (250) coupled to the policy decision point (225) and configured to store the association between the data object and the rights object.

3. The reference monitor of claim 1 or 2, further comprising a timer mechanism module (255) coupled to the policy decision point (225) and configured to receive an instruction on a timer setting and to indicate a timer status.

4. The reference monitor of claim 3, wherein the timer mechanism module (255) is configured to trigger the policy decision point (225) to instruct the policy enforcement point (220) to trigger a deletion or invalidation of the data object.

5. The reference monitor of one of the claims 1 to 4, further comprising a crypto module (230) coupled to the policy enforcement point (220) and to the policy decision point (225), the crypto module being configured to exchange the data object with the policy enforcement point (220) and to receive encryption instructions and encryption details from the policy enforcement point (220) or the policy decision point (225), the crypto module (230) being further configured to encrypt, decrypt, sign or make a signature check of the data object based on the encryption instructions and encryption details.

6. The reference monitor of one of the claims 1 to 5, further comprising a user credential module (260) coupled to the policy decision point (225), the user credential module (230) being configured to provide authentication or authorization data for a user or a device.

7. The reference monitor of claim 5 or 6, further comprising a logger module (235) coupled to the policy enforcement point (220), the policy decision point (225), the crypto module (230) and the usage control server (215), the logger module (260) being configured to log data and to provide logging data based on an instruction of the policy decision point (225) or the usage control server (215) and to use the crypto module (230) to sign the logging data.

8. The reference monitor of one of the claims 1 to 7, further comprising a global context handler (265) coupled to the policy decision point (225) and the usage control server (215), the global context handler (265) being configured to maintain a global record of the data object at the usage control server (215), based on a global context instruction from the policy decision point (225).

9. The reference monitor of one of the claims 1 to 8, further comprising a data storage manager (270) or an interface to an external data storage manager (270) coupled to the policy enforcement point (220) or to the policy decision point (140;225) and to a storage device, the data storage manager (270) being configured to store, retrieve or delete the data object from the data storage based on a data operation instruction from the policy enforcement point (130;220) or the policy decision point (140;225).

10. The reference monitor of one of the claims 1 to 9, implemented in the application, in a framework, or in an operating system.

11. The reference monitor of one of the claims 1 to 9, implemented on a central server or on a software client.

12. The reference monitor of one of the claims 1 to 9, implemented in a distributed manner, wherein the reference monitor is partially implemented on a central server and on a software client.

13. A method for enforcing usage control on a data object based on an associated rights object and for managing an exchange of the data object and the associated rights object between an application (110; 205) and a usage control server (120; 215), the rights object defining a user and/or device based binding between the rights object and the data object, the method comprising:
communicating with the application (110; 205) through a policy enforcement point (130; 220);
deciding on an data object request received from the application (110; 205) via the policy enforcement point (130; 220) by a policy decision point (140; 225);
receiving an instruction from the policy decision point (140; 225) at a data object retriever/receiver (150; 245);
exchanging the data object with the usage control server (120; 215) and the policy enforcement point (130; 225) on the basis of the instruction from the policy decision point (140; 225) through the data object retriever/receiver (150; 245);
receiving the rights object associated with the data object from the usage control server (120; 215) on the basis of an instruction from the policy decision point (140; 225) through a rights object storage (160; 240); and
storing the received rights object associated with the data object in the rights object storage (160; 240).

14. A computer program having program code for executing the method of claim 13, when the program code runs on a computer.
